# EUROPEAN PATENT APPLICATION

(11) **EP 1 150 207 A2**
(43) Date of publication of application: **31.10.2001**
(21) Application number: 01109486.9
(22) Date of filing: 25.04.2001
(51) Int. Cl.: G06F 9/445, G06F 9/44

(54) **Client-server system, computer readable medium and computer-executable program product for updating software**

(30) Priority: 26.04.2000 JP 2000125119
(71) Applicant: Nifty Corporation, Shingawa-ku, Tokyo 140-8544 (JP)
(72) Inventor: Suzuki, Ryuichi, c/o NIFTY Corporation, Shinagawa-ku, Tokyo 140-8544 (JP); Kenmotsu, Takeo, c/o NIFTY Corporation, Shinagawa-ku, Tokyo 140-8544 (JP); Nakaizumi, Takashi, c/o NIFTY Corporation, Shinagawa-ku, Tokyo 140-8544 (JP); Kobayashi, Tsutomu, Shibuya-ku, Tokyo 150-0001 (JP); Satoh, Osamu, Machida-shi, Tokyo 194-0021 (JP)
(74) Representative: HOFFMANN - EITLE

(57) **Abstract**

Disclosed is a client-server system in which a software product for performing a specific processing is automatically updated. The client-server system includes one or more client apparatus onto which software (files) for specific processing are installed and a server apparatus onto which the software of the latest version is installed. Each client apparatus, when the software is activated, checks whether one or more updated files exist in the sever apparatus before starting the intrinsic processing. If one or more updated files exist in the server apparatus, the client apparatus downloads the files from the server apparatus and then starts the intrinsic processing using downloaded files.

## Description

### BACKGROUND OF THE INVENTION

### 1. Field of the Invention

The present invention relates to a client-server system including at least one client apparatus in which a specific processing is performed under the control of software and a server apparatus holding files to update the software, and to a computer readable medium for causing a computer to operate as a client apparatus which composes such a client-server system. The present disclosure relates to subject matter contained in Japanese Patent application No. 2000-125119 (filed on April 26, 200), which is expressly incorporated herein by reference in its entirety.

### 2. Description of the Related Art

As is well known, in recent years, files (difference file etc.) to update a software (to upgrade revision or version of the software product) can be downloaded from the web site which the vender of the software manages. Moreover, software is onto the market which has a menu for accessing to the web site in which the files to update the software are provided.

Downloading enables user to update his or her software, as soon as the vender upgrades the software. However, even if the software is the one with such a menu, the user must perform an operation different from operations to use the software in order to update it by downloading. There are many users who think it troublesome to perform such operation (or don't know the existence of updated software) and therefore continue to use the software without updating.

### SUMMARY OF THE INVENTION

Accordingly, an object of the present invention is to provide a client-server system in which software is automatically updated. Another object of the present invention is to provide a computer readable medium stored with a program and a computer-executable program product that cause a computer to function as an apparatus that can constitute such a client-server system.

To achieve the above 1 mentioned objects, in constructing a client-server system including a server apparatus and one or more client apparatuses, the present invention uses, as the server apparatus, an apparatus which comprises a server side file storing part for storing one or more files which are to be stored in a client apparatus to perform specific processing; an update list storing part for storing a update list holding information which specifies versions of the one or more files stored in the server side file storing part; an update list sending back part for, when a processing start request of fixed contents is received, sending back the update list stored in the update list storing part to the client apparatus from which the processing start request is sent; and a sending back part for, when receiving a transfer request for one or more files stored in the server side file storing part, sending back the one or more files which are requested by the transfer request in the server side file storing part to the client apparatus from which the processing start request is sent.

As each of the client apparatuses, the invention uses a apparatus which comprises a client side file storing part for storing one or more files used to perform the specific processing; a local update list storing part for storing a local update list holding information which specifies versions of the one or more files stored in the client side file storing part; a processing start request sending part for sending the processing start request, when instruction to start the specific processing is given by user; file specifying part for specify one or more files to obtain for performing the specific processing in the latest condition by comparing the local update list stored in the local update list storing part with the update list which is received in response to the start request sent by the processing part; and a specific processing starting part for, if one or more files are specified by the file specifying part, sending the transfer request for the specified files to the server apparatus and storing the one or more files which the sending back part of the server apparatus sends in response to the transfer request into the client side file storing part and updating the local update list in the local update list storing part according to the stored files and starting the specific processing, and for, if no file is specified by the file specifying part, starting the specific processing.

That is, in the client-server system of the present invention, when the specific processing is instructed to start, processing is performed to check whether one or more updated files exist in the sever apparatus (the server side file storing part) is performed before starting the processing. If one or more updated files exist in the server apparatus, the files are automatically downloaded into the client apparatus, and then the specific processing is started using downloaded files.

Thus, in this client-server system, software (files) for performing the specific processing is updated automatically, user of each client apparatuses can always use the software in the latest (best) condition without doing any work concerning updating software.

Note that, in realizing the client-server system of the present invention, contents of the specific processing is not limited; however, it is desirable that the specific processing is the process that the server apparatus and the client apparatus performs while exchanging information therebetween. In other word, it is desirable to apply the present invention to apparatus in which such processing is performed.

Furthermore, in realizing the client-server system of the present invention, it is possible to add a software supplying part for supplying software which causes a computer capable of communicating with the server apparatus to function as the client apparatus.

And, a computer readable medium of the present invention stores a program for causing a computer to function as the client apparatus of the present invention. The computer-executable program product of the present invention also causes a computer to function as an apparatus in which software (computer-executable program product) is automatically updated.

Accordingly, use of the computer readable medium or the computer-executable program product lead to a system in which user can always use his (or her) software in the latest (best) condition without doing any work concerning updating software.

### BRIEF DESCRIPTION OF THE DRAWINGS

These and other objects and advantages of the present invention will become clear from the following description with reference to the accompanying drawings, wherein:
Fig. 1 is a schematic view showing a configuration of a client-server system according to an embodiment of the present invention;
Fig. 2 is a schematic view showing a hardware construction of the client apparatus included in the client-server system;
Fig. 3 is a figure illustrating a screen displayed on the display of the client apparatus;
Fig. 4 is a sequence diagram showing the operation procedure of the client apparatus and the server apparatus when the "InterPot" software is updated;
Fig. 5 is a figure illustrating a menu screen displayed on the display of the client apparatus;
Fig. 6 is a figure illustrating a log-in screen displayed on the display of the client apparatus; and
Fig. 7 is a figure illustrating a start screen displayed on the display of the client apparatus.

### DETAILED DESCRIPTION OF THE PREFERRED EMBODIMENT

An embodiment of the present invention will hereinafter be described with reference to the drawings.

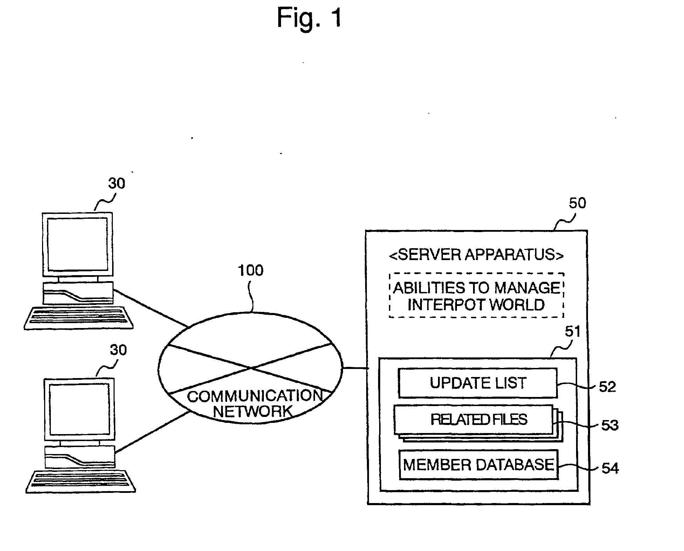

First of all, the configuration and the operation of the client-server system of the embodiment will be outlined referring to Figs. 1 to 3.

As shown in Fig. 1, the client-server system of this embodiment is composed of one server apparatus 50 and at least one client apparatus 30 (two client apparatuses 30 are depicted in the figure), which are connected mutually through a communication network 100.

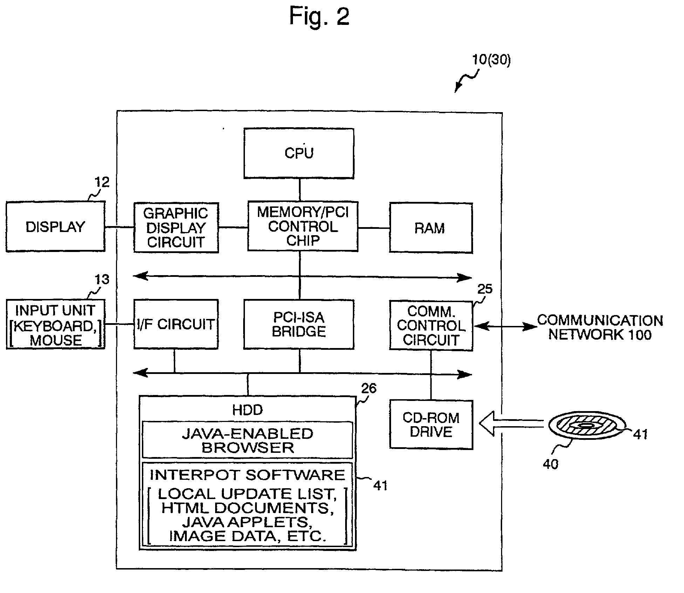

As schematically shown in Fig. 2, each client apparatus 30 which composes the client-server system is constructed by installing "InterPot" software 41 distributed via a CD-ROM 40 onto a computer 10 of a general configuration, which is provided with a communication control circuit 25 (modem, TA, NIC, etc.) to access the communication network 100, and onto which a Java-enabled browser is installed. Note that "InterPot" is trademark or registered trademark of Nifty corporation, in Japan and other countries Java is trademark or registered trademark of Sun Microsystems, Inc., in the United States and other countries.

The "InterPot" software 41 is software whose intrinsic function is to enable a user to visit the "InterPot" world, which is a virtual world defined and controlled by the server apparatus 50, using his or her computer 10 (client apparatus 30), and it is installed by using an installation program also recorded in the CD-ROM 40.

The "InterPot" software 41 is composed of plural HTML document files, plural Java applet files, plural image data files, a local update list and so on. The majority of these files are used to implement the intrinsic function.

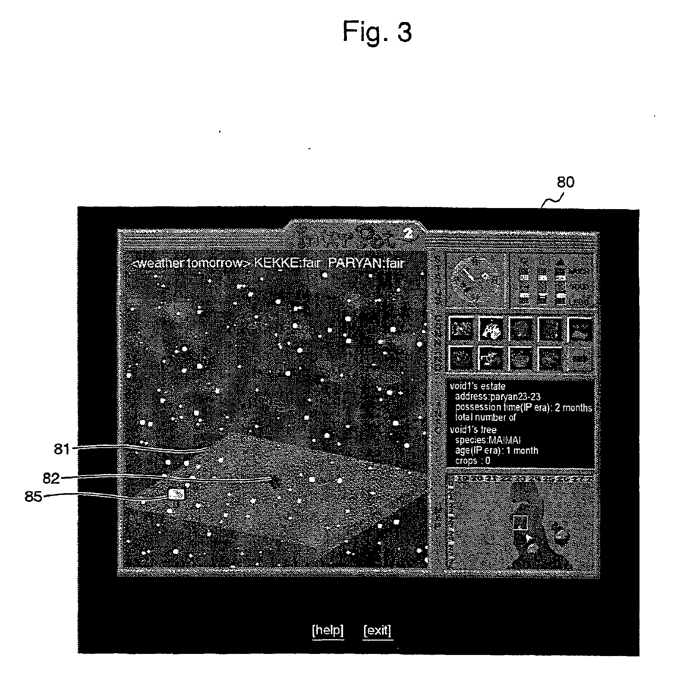

That is, the "InterPot" software 41 (mainly, Java applets in the "InterPot" software 41) in each client apparatus 30 functions in cooperation with software installed onto the server apparatus 50 and thereby causes the client apparatus 30 to display, for example, the main screen 80 shown in Fig. 3 on the display 12. While displaying the main screen 80, the client apparatus 30 sends information indicating the contents of the operations made by user to the server apparatus 50.

On the other hand, the server apparatus 50,under the control of the software, updates information that defines the "InterPot" world based on the information from the client apparatus 30 and time elapsed. And, the server apparatus 50 performs processing to make a change to the image of the tree 82 (processing to send to the client equipment 30 information which causes the "InterPot" software 41 to display another image of the tree 82), processing to change the contents depicted on the signboard 85, processing to make one or more virtual animals, which are inhabited in the "InterPot" world, to appear on the plot 81.

The client-server system of this embodiment is a system in which updating of the "InterPot" software 41 in the client apparatus 30 is automatically done. For this processing, the local update list, which holds information indicating versions of the files which composes the "InterPot" software 41 stored in the HDD 26, is included in the "InterPot" software 41. In addition, in the HDD 51 provided in the server apparatus 50, various "InterPot" software related files 53 (hereinafter referred simply to as related file 53) which should be installed into the client apparatus 30 to update the "InterPot" software 41 to the latest one, and an update list which holds information specifying the versions of the related files 53.

Incidentally, user that can directly access to the "InterPot" world is limited to the one who has been completed the registration procedure by using the "InterPot" software 41 (hereafter, referred to as member). Therefore, in the HDD 51, a member database 54 to memorize information on members (information which contains ID and password, etc.) is stored.

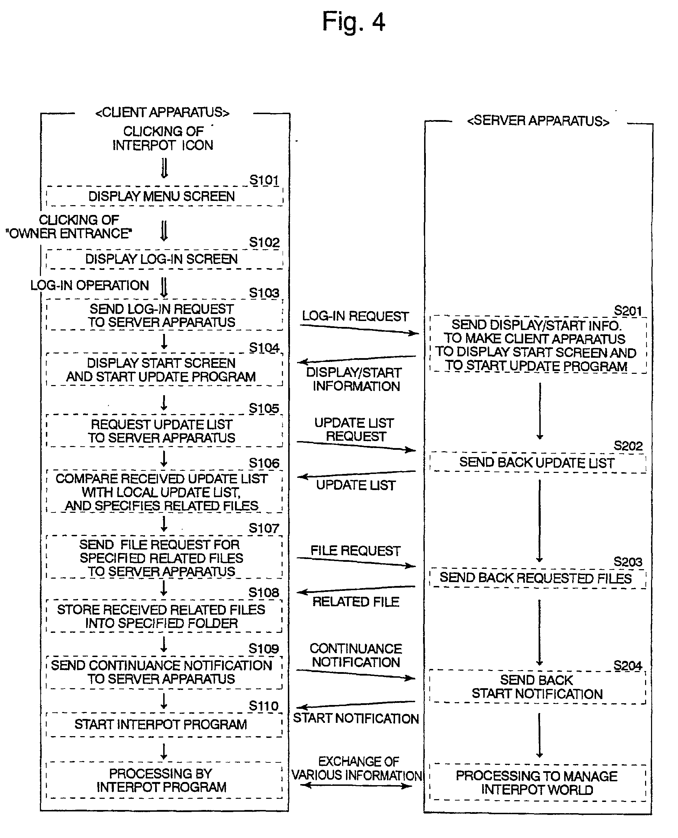

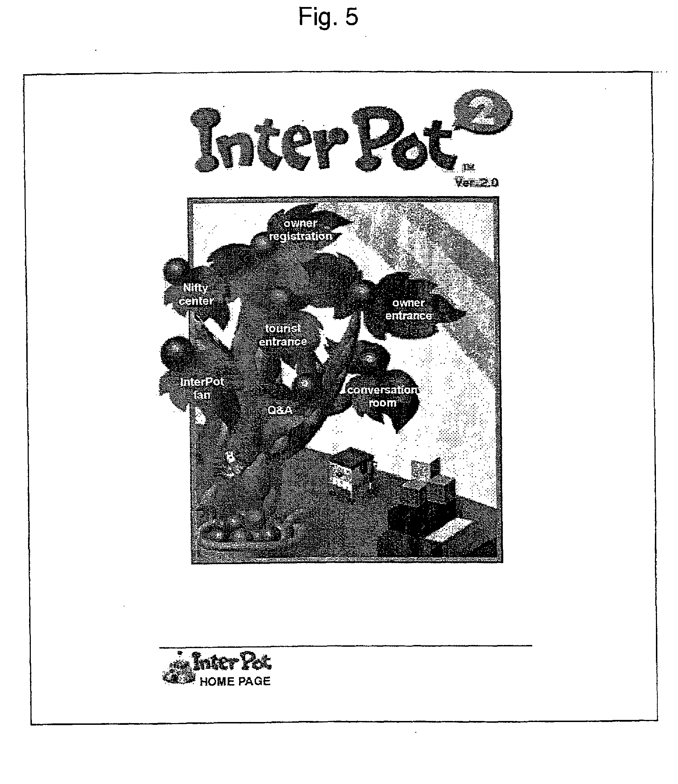

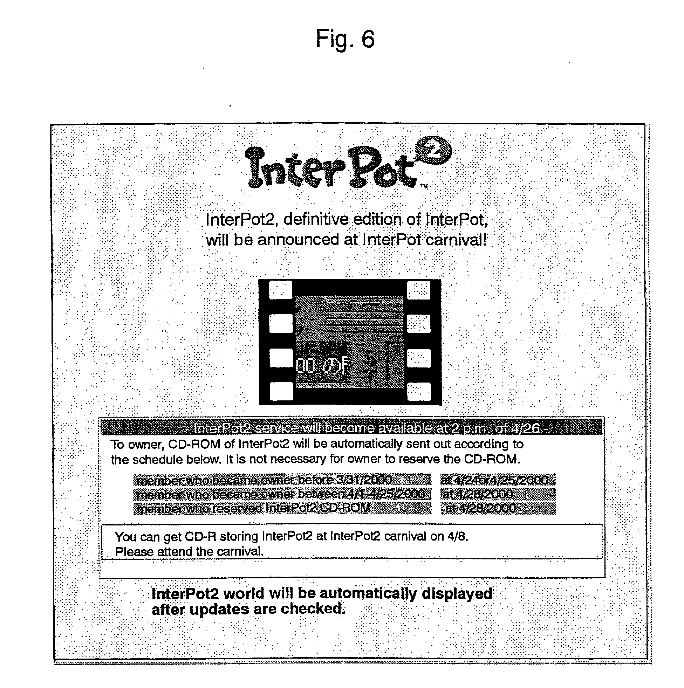

Hereinafter, the update operation in this client-server system is discussed with reference to Fig. 4 through Fig. 7. Fig. 4 is a sequence diagram showing the operation procedures of the client apparatus 30 and the server apparatus 50 when the "InterPot" software 41 is updated. Fig.5 through Fig. 7 are explanation diagrams of screens displayed on the display 12 of the client apparatus 30 when the "InterPot" software 41 is updated.

In installing the "InterPot" software, the aforementioned installation program stores files which composes the "InterPot" software 41 into a fixed folder and creates on the desktop an "InterPot" icon which the user should click to use the "Interfot" software 41.

When the member clicks the "InterPot" icon, as schematically shown in Fig. 4, in the client apparatus 30, processing to display a menu screen is performed (step S101). Concretely, the Java-enabled browser is initiated, and processing to interpret and display a fixed HTML document that composes the "InterPot" software 41 is performed by the Java-enabled browser. As a result, the menu screen shown in Fig. 5 is displayed on the display 12 of the client apparatus 30.

When the member clicks the area where "owner entrance" is shown of the menu screen, processing to display a log-in screen is performed (step S102), and the log-in screen 60 shown in Fig. 5 having text boxes 61 and 62 for entering ID and password, a send button 63, etc. is displayed on the display apparatus 12 of the client apparatus 30.

When the member clicks the send button 63 after entering his ID and password to the text boxes 61 and 62 on log-in screen 60, respectively, in the client apparatus 30, performed is processing to send the log-in request (HTTP request) containing the ID and the password, which the server apparatus 50 will receive, to the communication network 100 (step S103).

The server apparatus 50 which receives the log-in request, after confirming the combination of the ID and the password included in the log-in request is the one registered in the member database 54, sends back display/start information to the client apparatus 30 from which the log-in request is sent (step S201). Here, the display/start information is information (HTML document) that causes the display 12 of the client apparatus 30 from which the log-in request is sent a start screen containing importance notices to the "InterPot" members, and also causes an update program (Java applet for the update processing) which is the composition element of the "InterPot" software 41 to start. Incidentally, if the combination of ID and password included in the log-in request is the one not registered in the member database 54, the server apparatus 50 sends information that causes the display 12 to display the screen denoting that effect back to the client apparatus 30 in step S201.

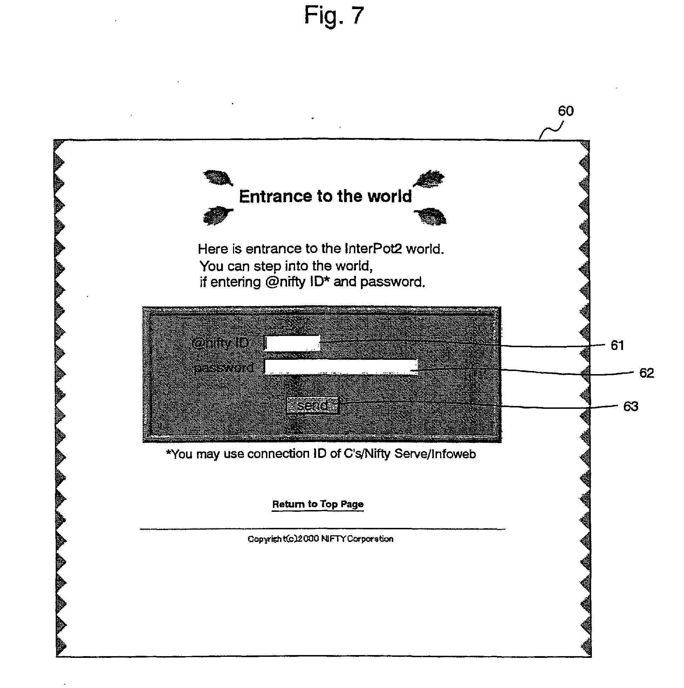

In the client apparatus 30 which receives the display/start information, processing to display the start screen corresponding to the contents of the received display/start information, for instance, the start screen shown in Fig. 7, is performed and the update program is started (step S104). Then, under the control of the started update program, an update list request to request for the server apparatus 50 to transfer the update list 52 is sent to the communication network 100 (step S105).

The server apparatus 50 that receives the update list request sends back the update list 52 to the originating apparatus of the request (step S202).

In the client apparatus 50 receiving the update list 52 from the server apparatus 50, the contents of the update list 52 are compared with the contents of the local update list, thus, the related files 53 that are needed to be downloaded to update the "InterPot" software 41 to be the latest one, that is, the related files 53 whose version in the update list 52 is newer than version in the local update list and the new (newly added) related files 53 are specified (step S106). Afterwards, processing to request for the server apparatus 50 to transfer the specified related files 53 is performed (step S107).

The server apparatus 50 which receives the file request sent by the processing in step S107 reads the requested related files from the HDD 51 and sends them back to the origination apparatus of the file request (step S203).

In the client apparatus 30 which receives the related files 53 sent from the server apparatus 50, the processing to store the related files 53 into the fixed folder (folder specified by the update list 52 etc.) is performed (step S108). Then, after the storage of related files 53 is completed, under the control of the update program, processing to send the log-in continuance notification which is the end notification of update processing to the server apparatus 50 is performed (step S109). Incidentally, if no related file 53 which should be downloaded is specified in step S106 (namely, when the update has already been completed), this step S109 is executed, neither step S107 nor step S108 being executed in client apparatus 30.

The server apparatus 50 that receives the log-in continuance notification sends back "InterPot" program start instruction to the client apparatus 30 (step S204). Here, the "InterPot" program start instruction is HTML document specifying the files (applet file etc.) which should be used.

In the client apparatus 30 receiving the "InterPot" program start instruction, the "InterPot" program (applet to display the screen shown in Fig. 3) is started with using the downloaded files (step S110). Afterwards, the intrinsic processing of the "InterPot" software 41 is performed.

As described above, in the present client-server system, when related files 53 concerning to data and/or program whose version are newer than that in the "InterPot" software 41 in the client apparatus 30, the related files 53 are automatically installed into the client apparatus 30. Then, the intrinsic processing is performed using installed related files 53.

Therefore, use of this system leads to that user (member) of each client apparatus 30 can always use the software in the latest (best) condition without doing any work concerning updating software.

### <Variation of the embodiment>

The client-server system that explained as the embodiment is a system for offering members the service for accessing "the "InterPot" world". It is natural that the automatic update procedure used in the system of the embodiment may be adapted to software products of other kinds (for other purposes). However, if this technology is applied to software which is needless to connect to server apparatus for perform the intrinsic processing, useless connections to the server apparatus will be frequently (every time) made. Therefore, it is preferable to apply the present technique to the software, which needs to connect with the server apparatus for the intrinsic processing.

Moreover, the system explained in the embodiment is a system in which the server apparatus 50 put out the start instruction for the intrinsic processing to the software to be updated, however, the system may be composed so that the client apparatus 30 voluntarily starts the intrinsic processing using the updated files. Moreover, the system explained in the embodiment is a system in which the client apparatus 30 and the server apparatus 50 start cooperated processing after the password etc. have been input. However, the system can be composed so that the cooperated processing will be started immediately when the execution of the processing is ordered.

In addition, the "InterPot" software 41 is installed from CD-ROM40 onto the client apparatus 30 in the system of the embodiment. It is possible to add the ability for supplying the client apparatuses 30 with the "InterPot" software products 41 to the server apparatus 50. Moreover, the "InterPot" software 41 is software which needs Java-enabled browser, software which operates singly (operates on the some OS) may be created based on the technology used for the "InterPot" software 41.

While there has been described what are at present considered to be preferred embodiment of the present invention, it will be understood that various modifications may be made thereto, and it is intended that the appended claims cover all such modifications as fall within the true spirit and scope of the invention.

## Claims

1. A client-server system including a server apparatus and one or more client apparatuses,
said server apparatus comprising:
a server side file storing part for storing one or more files which are to be stored in a client apparatus to perform specific processing;
an update list storing part for storing a update list holding information which specifies versions of the one or more files stored in said server side file storing part;
an update list sending back part for, when a processing start request of fixed contents is received, sending back the update list stored in said update list storing part to the client apparatus from which the processing start request is sent; and
an sending back part for, when receiving a transfer request for one or more files stored in said server side file storing part, sending back the one or more files requested by the transfer request in said server side file storing part to the client apparatus from which the transfer request is sent;
Each of said client apparatus comprising:
a client side file storing part for storing one or more files used to perform the specific processing;
a local update list storing part for storing a local update list holding information which specifies versions of the one or more files stored in said client side file storing part;
a processing start request sending part for sending the processing start request, when instruction to start the specific processing is given by user;
a file specifying part for specify one or more files to obtain for performing the specific processing in the latest condition by comparing the local update list stored in the local update list storing part with the update list received in response to the start request sent by said processing start part; and
a specific processing starting part for, if one or more files are specified by said file specifying part, sending the transfer request for the specified files to said server apparatus and storing the one or more files which said sending back part of said server apparatus sends in response to the transfer request into said client side file storing part and updating the local update list in said local update list storing part according to the stored files and starting the specific processing, and for, if no file is specified by said file specifying part, starting the specific processing.

2. The client-server system according to claim 1, wherein the specific process is a process that said server apparatus and said client apparatus performs while exchanging information therebetween.

3. The client-server system according to claim 1, wherein said server apparatus further comprises software supplying part for supplying software which causes a computer capable of communicating with said server apparatus to function as said client apparatus.

4. A Computer readable medium stored with software for causing a computer capable of communicating with a server apparatus to function as a client apparatus, said server apparatus comprising:
a server side file storing part for storing one or more files which are to be stored in said client apparatus to perform specific processing;
an update list storing part for storing a update list holding information which specifies versions of the one or more files stored in said server side file storing part;
an update list sending back part for, when a processing start request of fixed contents is received, sending back the update list stored in said update list storing part to the client apparatus from which the processing start request is sent; and
a sending back part for, when receiving a transfer request for one or more files stored in said server side file storing part, sending back the one or more files which are requested by the transfer request in said server side file storing part to the client apparatus from which the processing start request is sent; and
said client apparatus comprising:
a client side file storing part for storing one or more files used to perform the specific processing;
a local update list storing part for storing a local update list holding information which specifies versions of the one or more files stored in said client side file storing part;
a processing start request sending part for sending the processing start request, when instruction to start the specific processing is given by user;
a file specifying part for specify one or more files to obtain for performing the specific processing in the latest condition by comparing the local update list stored in the local update list storing part with the update list which said server apparatus update list sending back part of said server apparatus send in response to the start request sent by said processing start part; and
a specific processing starting part for, if one or more files are specified by said file specifying part, sending the transfer request for the specified files to said server apparatus and storing the one or more files which said sending back part of said server apparatus sends in response to the transfer request into said client side file storing part and updating the local update list in said local update list storing part according to the stored files and starting the specific processing, and for, if no file is specified by said file specifying part, starting the specific processing.

5. A computer-executable program product consists of plural files for adding ability to perform specific processing to a computer capable of communicating a server apparatus, said computer-executable program product including:
computer readable program code to send a processing start request to the server apparatus, when instruction to start the specific processing is given by user; and
computer readable program code to receive, as a response to the start request, information about versions of files provided in the server apparatus and specifies one or more files to be downloaded for performing the specific processing in the latest condition based on the received information; and
computer readable program code to, if one or more files are specified, download the specified files from the server apparatus and then starts the specific processing with using the downloaded files, and, if no file is specified, starts the specific processing without downloading any file from the server apparatus.
